# EUROPÄISCHE PATENTSCHRIFT

(11) **EP 1 252 441 B1**
(45) Veröffentlichungstag und Bekanntmachung des Hinweises auf die Patenterteilung: **07.12.2005**
(21) Anmeldenummer: 01911394.3
(22) Anmeldetag: 25.01.2001
(51) Int. Cl.: F03D 9/00

(54) **WINDRADGRUPPE MIT ZUMINDEST ZWEI WINDRÄDERN**
GROUP OF AT LEAST TWO WINDMILLS
GROUPE D'EOLIENNES A AU MOINS DEUX EOLIENNES

(30) Priorität: 03.02.2000 DE 20001864 U
(43) Veröffentlichungstag der Anmeldung: 30.10.2002
(73) Patentinhaber: SIEMENS AKTIENGESELLSCHAFT, 80333 München (DE)
(72) Erfinder: HERBST, Manfred, 90411 Nürnberg (DE)
(86) Internationale Anmeldenummer: PCT/DE2001/000299
(87) Internationale Veröffentlichungsnummer: WO 2001/057396

(56) Entgegenhaltungen:
- EP-A- 0 254 129
- EP-A- 0 884 833
- WO-A-00/01946
- WO-A-00/73652
- DE-A- 2 709 146
- US-A- 5 631 820
- K C KALAITZAKIS: "Power management of grid-connected wind generator clusters" EUROPEAN WIND ENERGY CONFERENCE, 22. Oktober 1984 (1984-10-22), XP002096850

## Beschreibung

Die Erfindung bezieht sich auf eine Windradgruppe mit zumindest zwei Windrädern, die jeweils einen Rotor mit in ihrer Stellung auf optimale Windausnutzung regelbaren Flügeln, mittels dem Windenergie in Rotationsenergie umwandelbar ist, und einen Generator aufweisen, auf den die Rotationsenergie des Rotors übertragbar und mittels dem die auf ihn übertragene Rotationsenergie in elektrische Energie umwandelbar ist, siehe zum Beispiel das Dokument WO-A-00/01946.

Die Flügel derartiger Windräder werden hinsichtlich ihrer jeweiligen Stellung auf bestmögliche Windausnutzung geregelt, wodurch sich beim Antrieb von in bekannten derartigen Windrädern eingesetzten Asynchrongeneratoren eine variable Drehzahl derselben einstellt. Diese Asynchrongeneratoren müssen über eine Umrichterspeisung auf Netzsynchronität geregelt werden; hierbei wird die Frequenz dieser doppelt gespeisten Asynchrongeneratoren mit entsprechenden Umrichtern netzsynchron und leistungsabhängig geregelt. Als Asynchrongeneratoren kommen bei gemäß dem Stand der Technik ausgestalteten Windradgruppen üblicherweise Asynchronschleifringläufergeneratoren zum Einsatz, die mit einem vergleichsweise hohen Wartungsaufwand einhergehen.

Der Erfindung liegt die Aufgabe zugrunde, die eingangs gestaltete Windradgruppe mit zumindest zwei Windrädern derart weiterzubilden, dass zum einen der Wartungsaufwand für die Generatoren der Windräder der Windradgruppe reduziert ist und zum anderen ein umrichterloser Parallelbetrieb mehrerer drehzahlvariabler Windräder in einer Windradgruppe möglich ist.

Diese Aufgabe wird erfindungsgemäß dadurch gelöst, dass der Generator jedes Windrads der Windradgruppe als Synchrongenerator oder als Asynchronkäfigläufergenerator ausgebildet ist und dass die Synchrongeneratoren bzw. die Asynchronkäfigläufergeneratoren der Windräder der Windradgruppe miteinander nach dem Prinzip der elektrischen Welle gekoppelt sind. Die Synchrongeneratoren bzw. die Asynchronkäfigläufergeneratoren treten erfindungsgemäß an die Stelle der bei vergleichbaren Anlagen bisher eingesetzten nicht wartungsfreien Asynchronschleifringläufergeneratoren, wodurch der Wartungsaufwand für die Windradgruppe erheblich reduziert wird. Darüber hinaus kann eine teure Umrichterspeisung der einzelnen Windräder der Windradgruppe vermieden werden. Die einzelnen Windräder der erfindungsgemäß gestalteten Windradgruppe arbeiten aufgrund ihrer Kopplung nach dem Prinzip der elektrischen Welle quasi gleitend mit einer ihnen gemeinsamen Frequenz. Dabei ist weiterhin grundsätzlich sichergestellt, dass die Stellung des Rotors jedes Windrades an die optimale Windausnutzung angepasst ist.

Es ist möglich, die nach dem Prinzip der elektrischen Welle gekoppelten Synchrongeneratoren bzw. Asynchronkäfigläufergeneratoren der Windradgruppe mittelbar oder unmittelbar mit einem Gleichstromübertragungssystem zu verbinden.

Alternativ können die nach dem Prinzip der elektrischen Welle gekoppelten Synchrongeneratoren bzw. die Asynchronkäfigläufergeneratoren der Windradgruppe über einen ihnen gemeinsamen Umrichter mit einem Netz verbunden sein.

Vorteilhaft sind die Synchrongeneratoren bürstenlos ausgebildet.

Die Drehzahlunterschiede der Windräder der Windradgruppe können durch unterschiedliche Lastwinkel der jeweiligen Synchrongeneratoren bzw. Asynchronkäfigläufergeneratoren ausgeglichen werden, wenn sich die Lastwinkel der Synchrongeneratoren bzw. der Asynchronkäfigläufergeneratoren separat einstellen können, wobei die Rotor- bzw. Flügelstellung der Windräder weiterhin auf bestmögliche Windnutzung geregelt wird.

Zweckmäßigerweise ist jedes Windrad mit einer Freischalteeinrichtung versehen, die vorteilhaft als Lasttrenner ausgebildet sein kann.

Eine vorstehend geschilderte Windradgruppe kann mit anderen gleichartigen Windradgruppen und/oder mit anders gestalteten Windradgruppen zu einem Windpark zusammengefasst werden.

Wenn die Synchrongeneratoren der Windräder der erfindungsgemäß gestalteten Windradgruppe durch langsame Auferregung synchronisierbar sind, kann der apparatetechnische Aufwand für die Windräder der Windradgruppe aufgrund der Einsparung ansonsten erforderlicher Schaltglieder erheblich reduziert werden.

Eine entsprechende Einsparung hinsichtlich des apparatetechnischen Aufwands lässt sich bei mit Asynchronkäfigläufergeneratoren ausgerüsteten Windrädern der erfindungsgemäß gestalteten Windradgruppe erzielen, wenn die Asynchronkäfigläufergeneratoren mittels in einem dem Gleichstromübertragungssystem zugeordneten Umrichter bei der Gleichrichtung anfallender Blindleistung aufmagnetisierbar sind, wobei die Aufmagnetisierung vorzugsweise allmählich stattfinden sollte. Hierdurch können dann die im Anlaufzeitpunkt fließenden Ströme reduziert werden.

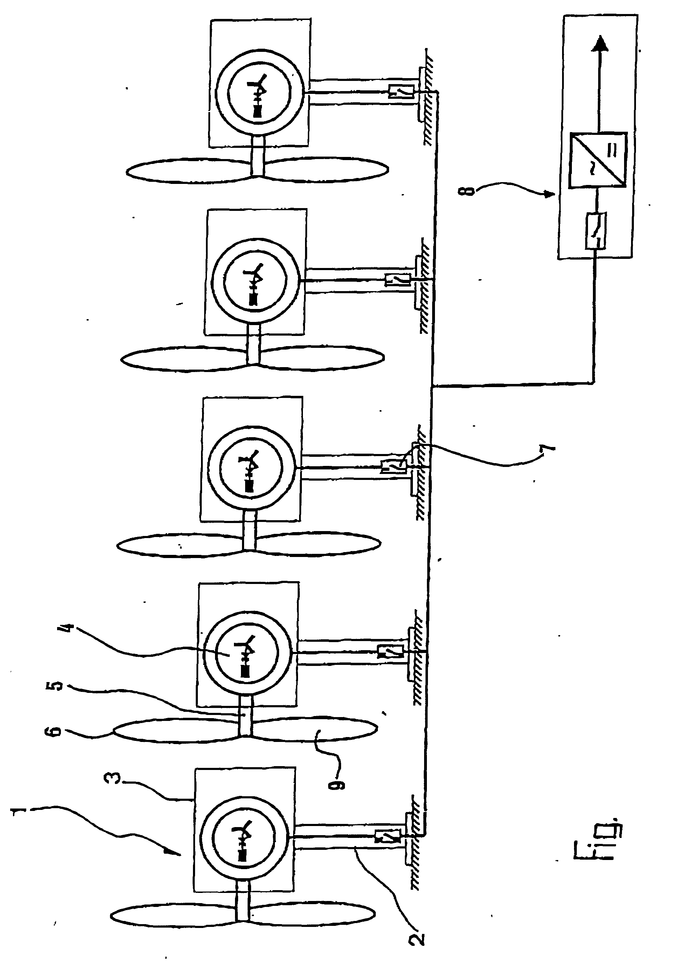

Im folgenden wird die Erfindung an Hand einer Ausführungsform unter Bezugnahme auf die einzige Figur näher erläutert, in der eine Windradgruppe gemäß der vorliegenden Erfindung prinzipiell dargestellt ist.

Eine in der einzigen Figur prinzipiell dargestellte erfindungsgemäße Windradgruppe besteht im dargestellten Ausführungsbeispiel aus fünf Windrädern 1. Die Windräder 1 sind zueinander gleich gestaltet, so dass im folgenden lediglich ein Windrad 1 beschrieben wird.

Zum Windrad 1 gehört ein Mast 2, der in geeigneter Weise am Boden befestigt ist.

Am oberen Ende des Mastes 2 ruht ein Gehäuse 3, in dem ein Synchrongenerator 4 aufgenommen ist. Der Synchrongenerator 4 ist bürstenlos ausgebildet.

Der Synchrongenerator 4 wird mittels einer Flügelwelle 5 mit Rotationsenergie versorgt. Die Flügelwelle 5 ragt durch das Gehäuse 3 nach außen und trägt an ihrem gehäusefernen Ende einen Rotor 6 mit Flügeln 9, der zentrisch auf dem betreffenden Ende der Flügelwelle 5 angeordnet ist und mittels dem Windenergie in Rotationsenergie umwandelbar ist.

Der Rotor 6 ist hinsichtlich seiner Stellung so variierbar, dass er für die jeweils bestmögliche Windausnutzung eingerichtet werden kann.

Jedes Windrad 1 ist mit einer im dargestellten Ausführungsbeispiel im unteren Bereich des Mastes 2 angeordneten Freischalteeinrichtung in Form eines Lasttrenners 7 ausgerüstet.

Die bürstenlosen Synchrongeneratoren 4 der Windräder 1 der in der einzigen Figur dargestellten Windradgruppe sind nach dem Prinzip der elektrischen Welle miteinander gekoppelt; die Einspeisung erfolgt mittelbar oder unmittelbar in ein Gleichstromübertragungssystem 8.

Alternativ ist es möglich, die bürstenlosen Synchrongeneratoren 4 über einen ihnen gemeinsamen Umrichter mit einem Netz zu verbinden.

Die Synchronisation der bürstenlosen Synchrongeneratoren 4 der Windräder 1 einer Windradgruppe erfolgt durch langsame Auferregung.

Die Drehzahlunterschiede der Windräder 1 einer Windradgruppe werden durch unterschiedliche Lastwinkel der ihnen jeweils zugeordneten bürstenlosen Synchrongeneratoren 4 ausgeglichen, wobei die Positionen der Rotoren 6 der jeweiligen Windräder 1 jeweils weiterhin auf bestmögliche Windausnutzung geregelt werden.

Eine Windradgruppe kann eine beliebige Anzahl von Windrädern 1 aufweisen, wobei es darüber hinaus selbstverständlich möglich ist, mehrere Windradgruppen zu einem Windpark zusammenzufassen. Erfindungsgemäß ist es möglich, mehrere drehzahlvariable Windräder 1 einer Windradgruppe bzw. eines Windparks in einem umrichterlosen Parallelbetrieb zu betreiben.

## Patentansprüche

1. Windradgruppe mit zumindest zwei Windrädern (1), die jeweils einen Rotor (6) mit in ihrer Stellung auf optimale Windausnutzung regelbaren Flügeln (9), mittels dem Windenergie in Rotationsenergie umwandelbar ist, und einen Generator (4) aufweisen, auf den die Rotationsenergie des Rotors (6) übertragbar und mittels dem die auf ihn übertragene Rotationsenergie in elektrische Energie umwandelbar ist, **dadurch gekennzeichnet, dass** der Generator jedes Windrads (1) der Windradgruppe als Synchrongenerator (4) oder als Asynchronkäfigläufergenerator ausgebildet ist und dass die Synchrongeneratoren (4) bzw. die Asynchronkäfigläufergeneratoren der Windräder (1) der Windradgruppe miteinander nach dem Prinzip der elektrischen Welle derart gekoppelt sind, dass die Windräder gleitend mit einer ihnen gemeinsamen Frequenz arbeiten.

2. Windradgruppe nach Anspruch 1, deren nach dem Prinzip der elektrischen Welle gekoppelte Synchrongeneratoren (4) bzw. Asynchronkäfigläufergeneratoren mittelbar oder unmittelbar mit einem Gleichstromübertragungssystem (8) verbunden sind.

3. Windradgruppe nach Anspruch 1, deren nach dem Prinzip der elektrischen Welle gekoppelte Synchrongeneratoren (4) bzw. Asynchronkäfigläufergeneratoren über einen ihnen gemeinsamen Umrichter mit einem Netz verbunden sind.

4. Windradgruppe nach einem der Ansprüche 1 bis 3, deren Synchrongeneratoren (4) bürstenlos ausgebildet sind.

5. Windradgruppe nach einem der Ansprüche 1 bis 4, bei der sich die Lastwinkel der Synchrongeneratoren (4) bzw. Asynchronkäfigläufergeneratoren separat einstellen können.

6. Windradgruppe nach einem der Ansprüche 1 bis 5, bei der jedes Windrad (1) eine Freischalteeinrichtung (7) aufweist.

7. Windradgruppe nach Anspruch 6, bei der die Freischalteeinrichtung als Lasttrenner (7) ausgebildet ist.

8. Windradgruppe nach einem der Ansprüche 1 bis 7, die Bestandteil eines Windparks mit mehreren derartigen und/oder anderen Windradgruppen ist.

9. Windradgruppe nach einem der Ansprüche 1 bis 8, deren Synchrongeneratoren (4) durch langsame Auferregung synchronisierbar sind.

10. Windradgruppe nach einem der Ansprüche 1 bis 8, deren Asynchronkäfigläufergeneratoren mittels in einem dem Gleichstromübertragungssystem (8) zugeordneten Umrichter bei der Gleichrichtung anfallender Blindleistung, vorzugsweise allmählich, aufmagnetisierbar sind.

## Claims

1. Wind rotor group having at least two wind rotors (1) which each have one rotor (6) with blades (9) whose position can be controlled for optimum wind utilization and by means of which wind energy can be converted to rotation energy, and which each have an alternator (4) to which the rotation energy from the rotor (6) can be transmitted and by means of which the rotation energy transmitted to it can be converted to electrical energy,
**characterized in that** the alternator of each wind rotor (1) in the wind rotor group is in the form of a synchronous alternator (4) or an asynchronous squirrel-cage alternator and **in that** the synchronous alternators (4) or the asynchronous squirrel-cage alternators of the wind rotors (1) of the wind rotor group are coupled together based on the principle of an electrical shaft, such that the wind rotors operate in a sliding form at a mutually common frequency.

2. Wind rotor group according to Claim 1, whose synchronous alternators (4) or asynchronous squirrel-cage alternators, which are coupled on the principle of an electrical shaft, are connected indirectly or directly to a direct-current transmission system (8).

3. Wind rotor group according to Claim 1, whose synchronous alternators (4) or asynchronous squirrel-cage alternators, which are coupled on the principle of an electrical shaft, are connected to a grid system via a mutually common converter.

4. Wind rotor group according to one of Claims 1 to 3, whose synchronous alternators (4) are brushless.

5. Wind rotor group according to one of Claims 1 to 4, in which the load angles of the synchronous alternators (4) or asynchronous squirrel-cage alternators can be adjusted separately.

6. Wind rotor group according to one of Claims 1 to 5, in which each wind rotor (1) has a disconnection device (7).

7. Wind rotor group according to Claim 6, in which the disconnection device is in the form of a switch disconnecter (7).

8. Wind rotor group according to one of Claims 1 to 7, which is a component of a wind park having a plurality of wind rotor groups of this type and/or different wind rotor groups.

9. Wind rotor group according to one of Claims 1 to 8, whose synchronous alternators (4) can be synchronized by slowly increasing the field.

10. Wind rotor group according to one of Claims 1 to 8, whose asynchronous squirrel-cage alternators can be magnetized, preferably gradually, by means of the wattless component which occurs during rectification in a converter which is associated with the direct-current transmission system 8.

## Revendications

1. Groupe d'éoliennes ayant au moins deux éoliennes (1), qui ont, respectivement, un rotor (6) qui a des ailes (9) réglables en position pour tirer le meilleur parti du vent et au moyen duquel de l'énergie éolienne peut être transformée en énergie de rotation et une génératrice (4) à laquelle l'énergie de rotation du rotor (6) peut être transmise et au moyen de laquelle l'énergie de rotation qui lui est transmise peut être transformée en énergie électrique, **caractérisé en ce que** la génératrice de chaque éolienne (1) du groupe d'éoliennes est constituée en génératrice (4) synchrone ou en génératrice asynchrone à rotor à cage et **en ce que** les génératrices (4) synchrones ou les génératrices asynchrones à rotor à cage des éoliennes (1) du groupe d'éoliennes sont couplées les unes aux autres suivant le principe de l'onde électrique de façon à ce que les éoliennes fonctionnent de manière flottante à une fréquence qui leur est commune.

2. Groupe d'éoliennes suivant la revendication 1, dont les génératrices (4) synchrones ou les génératrices asynchrones à rotor à cage couplées suivant le principe de l'onde électrique sont reliées directement ou indirectement à un système (8) de transmission de courant continu.

3. Groupe d'éoliennes suivant la revendication 1, dont les génératrices (4) synchrones ou les génératrices asynchrones à rotor à cage couplées suivant le principe de l'onde électrique sont reliées à un réseau par un convertisseur qui leur est commun.

4. Groupe d'éoliennes suivant l'une des revendications 1 à 3, dont les génératrices (4) synchrones sont sans balai.

5. Groupe d'éoliennes suivant l'une des revendications 1 à 4, dans lequel les angles de charge des génératrices (4) synchrones ou des génératrices asynchrones à rotor à cage peuvent être réglés séparément.

6. Groupe d'éoliennes suivant l'une des revendications 1 à 5, dans lequel chaque éolienne (1) a un dispositif (7) de déconnexion.

7. Groupe d'éoliennes suivant la revendication 6, dans lequel le dispositif de déconnexion est constitué sous la forme d'un sectionneur (7) à coupure de charge.

8. Groupe d'éoliennes suivant l'une, des revendications 1 à 7, qui fait partie d'un parc ayant plusieurs groupes d'éoliennes de ce genre et/ou d'autres groupes d'éoliennes.

9. Groupe d'éoliennes suivant l'une des revendications 1 à 8, dont les génératrices (4) synchrones peuvent être synchronisées par excitation lente.

10. Groupe d'éoliennes suivant l'une des revendications 1 à 8, dont les génératrices asynchrones à rotor à cage peuvent être remagnétisées, de préférence peu à peu, au moyen d'un convertisseur associé au système (8) de transmission de courant continu lors du redressement de puissance réactive qui se produit.
